# EUROPÄISCHE PATENTSCHRIFT

(11) **EP 2 153 966 B1**
(45) Veröffentlichungstag und Bekanntmachung des Hinweises auf die Patenterteilung: **13.01.2016**
(21) Anmeldenummer: 08014344.9
(22) Anmeldetag: 12.08.2008
(51) Int. Cl.: B29C 41/18, B29C 41/22, B29C 37/00

(54) **Verfahren zur Herstellung von unterschiedliche Farbbereiche aufweisenden Kunststoffformhäuten**
Method for producing plastic moulded skins with differently coloured areas
Procédé de fabrication de peaux en matière synthétique comprenant différentes gammes de couleur

(43) Veröffentlichungstag der Anmeldung: 17.02.2010
(73) Patentinhaber: SMP Deutschland GmbH, 79268 Bötzingen (DE)
(72) Erfinder: März, Hermann, 93326 Abensberg (DE); Stuber, Lothar, 93055 Regensburg (DE)
(74) Vertreter: Westphal, Mussgnug & Partner Patentanwälte mbB

(56) Entgegenhaltungen:
- WO-A-96/23041
- DE-A1- 10 359 964
- DE-A1-102006 027 172
- JP-A- 1 034 710
- JP-A- 61 244 512
- JP-A- 63 274 515

## Beschreibung

Die vorliegende Erfindung betrifft ein Verfahren zur Herstellung von unterschiedliche Farbbereiche aufweisenden Kunststoffformhäuten nach dem Oberbegriff des Anspruchs 1.

Verfahren zur Herstellung mehrfarbiger Kunststoffformhäute mit der sogenannten Maskentechnik sind seit längerem bekannt. So beschreibt die EP 0 972 625 A1 eine Vorrichtung für das Rotationssintern von Kunststoffformhäuten zur Herstellung von Armaturentafeln oder Innenverkleidungen von Kraftfahrzeugen, die im Wesentlichen aus einem beheizbaren Formwerkzeug sowie zwei unterschiedlich ausgerüsteten, zum Formwerkzeug passenden Behältern für Kunststoffpulver besteht, wobei die Behälter nacheinander in zwei unterschiedlichen Arbeitsschritten jeweils in Kombination mit dem Formwerkzeug eingesetzt werden. Dabei weist der erste Pulverbehälter einen schalenförmigen, in den Innenraum des Formwerkzeugs ragenden Vorsprung auf, mit dem ein Teil der Oberfläche des Formwerkzeugs abgedeckt werden kann. Dieser Pulverkasten wird mit einem ersten Kunststoffpulver in einem ersten Arbeitsschritt eingesetzt, wobei das erste Pulver an der freien Oberfläche des erwärmten Formwerkzeugs aufgeschmolzen wird, während der unter der schalenförmigen Abdeckung liegende Bereich der Oberfläche des Formwerkzeugs frei von Pulver bleibt.

Beim zweiten Arbeitsschritt wird dann ein zweiter Pulverkasten eingesetzt, der ein andersfarbiges Pulver beinhaltet und keinen für eine Abdeckung geeigneten Vorsprung mehr aufweist, so dass beim wiederholten Rotationssintern das zweite Pulver an dem vorher freigehaltenen Bereich der Oberfläche des Formwerkzeugs aufschmilzt und dort eine Formhaut in einer anderen Farbe ausbildet, die sich mit der ersten Formhaut zu einer mehrfarbigen Formhaut verbindet.

Problematisch bei dieser Vorrichtung ist der hohe apparative Aufwand, insbesondere auch für die Abdichtung der Abdeckung (Maske), wobei besonders bei komplizierten Formen die Gefahr der Undichtigkeit besteht und es zu einem Verwischen der Farbgrenzen kommen kann.

In der DE 10 2005 020 492 A1 und der DE 10 2005 020 493 A1 werden eine Vorrichtung bzw. ein Verfahren zur Herstellung von mehrfarbigen Kunststoffformhäuten beschrieben, insbesondere für Kraftfahrzeugteile, wie z.B. Armaturenbretter oder Türverkleidungen, wobei die Kunststoffformhäute im Sinterverfahren durch ein nacheinander erfolgendes, mehrfach kontinuierliches Anschmelzen von Kunststoffpulvern verschiedener Farbe an einer Oberfläche eines erwärmten Formwerkzeugs aufgebaut werden. Dabei sind die mit Kunststoffpulvern unterschiedlicher Farbe zu versehenden Bereiche der Oberfläche des Formwerkzeugs durch Vorsprünge oder Stege voneinander getrennt. Die Abdeckung oder Maske, die auch in diesem Fall in den Pulverbehälter integriert ist, ist an ihren Randbereichen mit einer Dichtung versehen und liegt mit dieser Dichtung auf den Stegen auf. Zusätzlich wird in den abgedeckten, durch Stege begrenzten Bereichen der Oberfläche ein Überdruck erzeugt. Auf diese Weise ist das Problem der exakten Farbtrennung gelöst, jedoch ist auch im diesem Fall ein hoher apparativer Aufwand erforderlich, insbesondere um die Maske sowie die damit verbundene Energieversorgung zur Verriegelung und Abdichtung der Maske auf der Formwerkzeugoberfläche sowie zur Erzeugung des Überdrucks im maskierten Bereich in einem entsprechenden Pulverkasten zu integrieren. Als zusätzliches Problem kommt hinzu, dass derartige mit Masken oder zusätzlichen Abdeckungen ausgerüstete Pulverbehälter oder sonstige Gegenstücke für das Formwerkzeug mit einer Reihe von Kabeln und Schläuchen versehen sind, um die Funktionstüchtigkeit der Maske zu gewährleisten. Diese Kabel- und Schlauchpakete bedingen eine unerwünschte Komplizierung und eine beträchtliche räumliche Einschränkung bei der Produktion.

In der DE 10 2006 027 172 A1 wird ein Verfahren zur Herstellung einer mehrfarbigen Formhaut beschrieben, das ebenfalls auf dem Rotationssinterprinzip beruht. Dabei wird ein Werkzeug eingesetzt mit einer einen Trennsteg enthaltenen Werkzeugform, wobei über den Trennsteg die Werkzeugform in einen ersten und zweiten Formbereich trennbar ist. Bei der Durchführung des Rotationssinterverfahrens wird nun eine erste Kunststoffmasse in dem ersten Formbereich und eine zweite Kunststoffmasse in den zweiten Formbereich eingebracht. Zuvor wird ein Trennstück auf dem Trennsteg aufgebracht, so dass sich beim Aufschmelzen der Kunststoffmassen die beiden unterschiedlichen Kunststoffe mit dem Trennstück zu einer einstückigen Formhaut verbinden. Auch bei diesem Verfahren wird zusätzlich mit Masken gearbeitet, die beispielsweise das Trennstück oder sogar einen ganzen Formbereich abdecken, um die unterschiedlich gefärbten Bereiche klar voneinander zu trennen. Auch dieses Verfahren ist relativ aufwändig, da zunächst ein Trennstück auf den Trennsteg aufgebracht werden muss, bevor die Formhaut ausgebildet wird. Darüber hinaus wird im Bereich des Trennstegs in der Formhaut eine Nut ausgebildet, die die unterschiedlichen Teilbereiche der Formhaut zusätzlich voneinander trennt. Je nach Verwendungszweck der Formhaut ist eine derartige Nut jedoch unerwünscht. Insbesondere für das Aufbringen eines Schriftzuges oder einer sonstigen bildlichen Darstellung auf einem Kunststoffbauteil ist das oben genannte Verfahren ungeeignet.

Um Schriftzüge oder grafische Darstellungen auf die Oberfläche von Bauteilen für Kraftfahrzeuge aufzubringen, sind sämtliche vorgenannten Verfahren nicht oder nur bedingt geeignet.

Bekannte Lackiertechnologien für die Herstellung von farblich gestalteten, optisch aufgewerteten Kunststoffformteilen sind das sogenannte "In-Mould-Coating" oder das "In-Mould-Painting". Diese Verfahren werden insbesondere bei spritzgegossenen Formteilen eingesetzt, wobei ein Speziallack oder eine Spezialfarbe auf die Seite des Werkzeugs aufgetragen wird, die die Sichtseite des Formteils abbildet. Diese Lackiertechnologien werden insbesondere eingesetzt, um mit Farbe oder Lack beschichtete unifarbene Spritzgussformteile herzustellen. Für das Aufbringen von Schriftzügen oder grafischen, mehrfarbigen Darstellungen sind diese Verfahren jedoch ebenfalls nicht oder nur bedingt geeignet. Derartige optische Ausgestaltungen von Bauteilen werden heute in der Regel durch nachträgliches Lackieren des Bauteils erreicht, was jedoch immer mit einem zusätzlichen, relativ hohen Arbeitsaufwand verbunden ist.

Die JP 01 034710 A offenbart ein Verfahren zur Herstellung von unterschiedliche Teilbereiche aufweisenden Kunststoffformhäuten über Rotationssintern, bei dem vor dem Aufschmelzen des Kunststoffpulvers im erwärmten Rotationssinterwerkzeug durch Auftragen eines Farbmediums auf die Werkzeugoberfläche eine Farbfläche erzeugt wird, wobei die Farbe beim Aufschmelzen des Kunststoffpulvers als Farbfläche auf die Kunststoff formhaut übertragen wird, die Farbe vom Kunststoff aufgenommen und irreversibel im Kunststoff eingebunden wird. Das Dokument gibt aber keine Anregung dafür, wie Formhäute mit unterschiedlich gefärbten Bereichen so hergestellt werden können, dass diese Bereiche deutlich und klar voneinander getrennt sind.

Weiterer Stand der Technik ist in den Schriften WO 96/23041 A, JP 61 244512 A, JP 63 274515 A und DE 103 59 964 A1 offenbart:

Die WO 96/23041 A beschreibt das Aufbringen eines Lackes durch Rollen auf eine Werkzeugoberfläche und anschließendes Rotationsgießen. In dem Dokument JP 61 244512 A ist das Aufbringen eines Farbbereichs durch Tampondruck und anschließendes Rotationssintern zur Herstellung einer Slushhaut offenbart. Die JP 63 274515 A offenbart ein Verfahren, mit dem ein kompliziertes und dichtes Druckmuster auf eine beliebige Form, unabhängig von der Gestaltung des Hohlraums der Form übertragen werden kann, unter Verwendung einer Kombination aus Tampondruckverfahren und Spritzgießverfahren. Die DE 103 59 964 A1 schlägt schließlich für die Herstellung einer mehrfarbigen Slushhaut die Verwendung eines Tampondruckverfahrens zum Aufbringen einer Haftschicht vor, auf die dann eine erste Kunststoffschicht aufgesintert wird.

Der vorliegenden Erfindung lag somit das Problem zu Grunde, ein Verfahren für die Herstellung von mehrfarbigen, beschrifteten oder mit grafischen Darstellungen versehenen Kunststoffformteilen für Kraftfahrzeuge bereitzustellen, welches die oben geschilderten Nachteile des Standes der Technik nicht aufweist.

Gelöst wird das Problem durch ein Verfahren mit dem Merkmal des Anspruchs 1. Weitere vorteilhafte Ausgestaltungen des Verfahrens sind in den jeweiligen Unteransprüche wiedergegeben.

Die Erfindung ermöglicht insbesondere die Herstellung von Slush-Häuten für Instrumententafeln, Türkomponenten, Mittelkonsolen oder sonstigen Innenverkleidungsbauteilen für Kraftfahrzeuge mit mehrfarbigen Farbapplikationen in Form von geometrischen Formen, wie z.B. Streifen, Schriftzügen oder Zierleisten-Imitationen, aber auch in Form von komplexen Bildern und Grafiken, bis hin zu Hologrammen.

Überraschenderweise wurde gefunden, dass durch eine Kombination des Rotationssinterprozesses mit einer Art Tampondruckverfahren mehrfarbige und grafisch gestaltete Slush-Häute hergestellt werden können, die dann für die Herstellung von Formteilen mit einer Slush-Haut-Oberfläche als Dekorschicht eingesetzt werden. Zur Gewinnung der Slush-Häute können konventionelle Formwerkzeuge eingesetzt werden, wie z.B. Galvanos, die in einem ersten Verfahrensschritt zunächst auf die übliche Weise erwärmt werden. In einem zweiten Schritt wird dann das Farbmedium, in Form von Dispersionsfarbe, Lack oder Flüsig-PVC, auf die Werkzeugoberfläche aufgetragen, wobei beispielsweise die Negativdarstellung eines Druckbildes erzeugt wird, das beim Aufschmelzen des. Kunststoffpulvers im folgenden Verfahrensschritt als Positivdarstellung auf die Kunststoffformhaut übertragen wird. Dabei wird die Farbe beim Aufschmelzen vom Kunststoff aufgenommen und im Kunststoff irreversibel eingebunden. Das gleiche gilt für flächige Einfärbungen, die auf diese Art ebenfalls übertragen werden können.

Das Auftragen des Farbmediums auf die werkzeugoberfläche kann prinzipiell nach jedem beliebigen Verfahren erfolgen. Erfindungsgemäß wird jedoch der Tampondruck eingesetzt, bei dem ein sogenanntes Druckklischee in seiner Oberfläche das zu druckende, tieferliegende Druckbild trägt, das von einem Tampon übernommen wird, mit dessen Hilfe das Druckbild auf die Werkzeugobexfläche übertragen wird, wobei der Tampon auf Grund seiner Elastizität die Form des Werkzeuges annimmt und so die Farbe zu annähernd 100 Prozent auf die Werkzeugoberfläche überträgt. Auf der heißen Werkzeugoberfläche wird das Lösungsmittel aus dem Farbmedium verdampft und die Farbe bleibt in Form von Pigmenten auf der Werkzeugoberfläche zurück und wird beim Aufschmelzen des Kunststoffpulvers vom Kunststoff aufgenommen und in der Kunststoffformhaut irreversibel in dem Kunststoff eingebunden. Dabei ist überraschenderweise kein Verlaufen oder Verschmieren der Farbe in der Kunststoffformhaut zu beobachten und das in die Formhaut übertragene Bild weist klare Konturen und Linien auf. Um dies zu gewährleisten, ist es erforderlich, dass das aufgetragene Farbmedium auf der heißen Werkzeugoberfläche ausreichend entlüftet wird, wobei das Lösungsmittel verdampft und die getrockneten Farbpigmente quasi vereinzelt auf der Werkzeugoberfläche zurückbleiben. Als Farbmedium können Dispersionsfarben, Lackfarben aber auch Flüssig-PVC eingesetzt werden.

Sollen komplexere oder mehrfarbige Abbildungen auf die Kunststoffformhaut übertragen werden, können auch mehrere unterschiedliche oder unterschiedlich gefärbte Farbmedien jeweils nacheinander auf die Oberfläche des Werkzeugs über den Tampondruck aufgetragen und entlüftet werden. Nach dem Auftragen und Entlüften der letzten Farbschicht wird dann der eigentliche Rotationssinterprozess gestartet.

Verwendet werden die Kunststoffformhäute insbesondere zur Herstellung von Innenverkleidungsbauteile für Kraftfahrzeuge wie z.B. Instrumententafeln, Türkomponenten, Mittelkonsolen oder sonstigen Bauteilen,

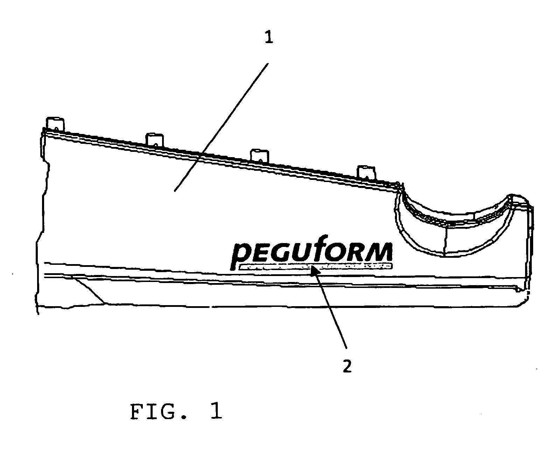

Im Folgenden wird die vorliegende Erfindung zusätzlich anhand einer Zeichnung erläutert. Die Figur 1 zeigt als Beispiel für ein mit einer mehrfarbigen Slush-Haut oberflächlich beschichtetes Bauteil einen Ausschnitt einer Instrumententafel 1, die im Beifahrerbereich einen Schriftzug 2 aufweist. Die Figur 1. ist lediglich als Beispiel für eine Einsatzmöglichkeit des erfindungsgemäßen Verfahrens gedacht. Wie bereits in der Beschreibung ausgeführt, können mit diesem Verfahren auch Flächen, Streifen oder komplizierte grafische Darstellungen auf die Kunststoffformhaut und damit indirekt auf das Formteil übertragen werden.

Das erfindungsgemäße Verfahren ist kostengünstig und erfordert keinen zusätzlichen großen technischen Aufwand, da beispielsweise aufwändige Maskierungen oder sonstige Manipulationen am Formwerkzeug entfallen und konventionelle Werkzeuge eingesetzt werden können. Ein weiterer Vorteil ist, dass ohne zusätzlichen Aufwand mehrfarbige Applikationen möglich sind. Hinzu kommt, dass die Farbe im Kunststoff der Slush-Haut eingebunden wird, wobei Farbe und Kunststoff stofflich fest miteinander verbunden sind und ein Abreiben oder Abblättern nicht mehr möglich ist.

## Patentansprüche

1. Verfahren zur Herstellung von unterschiedliche Teilbereiche aufweisenden Kunststoff-Formhäuten über Rotationssintern mit den Schritten,
a) Erwärmen eines Rotationssinterwerkzeuges
b) Aufschmelzen eines Kunststoffpulvers an der Werkzeugoberfläche
c) Ausbilden einer Formhaut auf der Werkzeugoberfläche
d) Abkühlen des Werkzeugs und
e) Entnehmen der Kunststoff-Formhaut, wobei vor dem Aufschmelzen des Kunststoffpulvers im erwärmten Rotationssinterwerkzeug durch Auftragen eines Farbmediums auf die Werkzeugoberfläche eine Farbfläche bzw. die Negativdarstellung eines Druckbildes erzeugt wird und die Farbe beim Aufschmelzen des Kunststoffpulvers als Farbfläche bzw. als Positivdarstellung des Druckbildes auf die Kunststoff-Formhaut übertragen wird, wobei die Farbe vom Kunststoff aufgenommen und irreversibel im Kunststoff eingebunden wird,
**dadurch gekennzeichnet, dass** das Farbmedium mit Hilfe eines Tampondrucks auf die Werkzeugoberfläche aufgetragen, dort entlüftet und die Farbe anschließend auf die Kunststoff-Formhaut übertragen wird, wobei auf der heißen Werkzeugoberfläche das Lösungsmittel aus dem Farbmedium verdampft wird und die Farbe in Form von Pigmenten auf der Werkzeugoberfläche zurückbleibt und beim Aufschmelzen des Kunststoffpulvers vom Kunststoff aufgenommen und in der Kunststoff-Formhaut irreversibel in dem Kunststoff eingebunden wird.

2. Verfahren nach Anspruch 1,
**dadurch gekennzeichnet, dass** als Farbmedium Dispersionsfarbe, Lack oder Flüssig-PVC eingesetzt wird.

3. Verfahren nach Anspruch 1 oder 2,
**dadurch gekennzeichnet, dass** mehrere unterschiedliche oder unterschiedlich gefärbte Farbmedien nacheinander auf die Oberfläche des Werkzeugs aufgetragen und entlüftet werden, um anschließend zur Ausbildung einer komplexen oder mehrfarbigen Abbildung auf die Kunststoff-Formhaut übertragen zu werden.

4. Verwendung von Kunststoff-Formhäuten, hergestellt nach einem Verfahren nach einem der Ansprüche 1 bis 3, zur Herstellung von Formteilen für Instrumententafeln, Türkomponenten, Mittelkonsolen oder anderen KunststoffFormteilen für Kraftfahrzeuge.

## Claims

1. Method for producing, via rotational sintering, plastic moulded skins having different sub-areas, said method comprising the steps:
a) heating a rotational sintering tool,
b) melting a plastic powder onto the tool surface,
c) forming a moulded skin on the tool surface,
d) cooling the tool, and
e) removing the plastic moulded skin, wherein,
prior to the melting of the plastic powder in the heated rotational sintering tool, a coloured surface or the negative representation of a printed image is generated by applying a colour medium to the tool surface and, when the plastic powder is melted, the colour is transferred to the plastic moulded skin as a coloured surface or as the positive representation of the printed image, the colour being picked up by the plastic and irreversibly incorporated in the plastic,
**characterized in that**
the colour medium is applied to the tool surface by pad printing, is deaerated thereon and the colour is then transferred to the plastic moulded skin, wherein the solvent is evaporated from the colour medium on the hot tool surface and the colour remains in the form of pigments on the tool surface and, when the plastic powder is melted, is picked up by the plastic and is irreversibly incorporated in the plastic in the plastic moulded skin.

2. Method according to claim 1, **characterized in that** emulsion paint, gloss paint or liquid PVC is used as the colour medium.

3. Method according to claim 1 or 2, **characterized in that** a plurality of different or differently coloured colour media are applied to the surface of the tool one after the other and are deaerated in order then to be transferred to the plastic moulded skin to form a complex or multi-coloured depiction.

4. Use of plastic moulded skins, produced by a method according to any of claims 1 to 3, to produce moulded parts for instrument panels, door components, centre consoles or other plastic moulded parts for motor vehicles.

## Revendications

1. Procédé d'obtention de peaux de cuisson en matériau synthétique présentant différentes zones partielles par rotomoulage comprenant les étapes consistant à :
a) chauffer un outil de rotomoulage,
b) faire fondre une poudre de matériau synthétique sur la surface de cet outil,
c) former une peau de cuisson sur la surface de l'outil,
d) refroidir l'outil, et
e) prélever la peau de cuisson en matériau synthétique, selon lequel avant la fusion de la poudre en matériau synthétique, on produit dans l'outil de rotomoulage chauffé par application d'un agent en couleur sur la surface de cet outil une surface en couleurs ou la représentation en négatif d'une image d'impression et l'on transfère la couleur sur la peau de cuisson en matériau synthétique par fusion de la poudre en matériau synthétique sous la forme d'une surface en couleur ou d'une représentation en positif de l'image d'impression, la couleur étant recueillie par le matériau synthétique et intégrée de façon irréversible dans ce matériau,
**caractérisé en ce que**
l'agent en couleurs est appliqué par tampographie sur la surface de l'outil, puis dégazé et la couleur est ensuite transférée sur la peau de cuisson en matériau synthétique, le solvant étant vaporisé pour être extrait de l'agent en couleurs sur la surface de l'outil chaude, la couleur restant sous la forme de pigments sur la surface de l'outil, étant recueillie par la matière plastique lors du chauffage de la poudre en matière plastique et étant intégrée de manière irréversible dans le matériau synthétique de la peau de cuisson en matériau synthétique.

2. Procédé conforme à la revendication 1,
**caractérisé en ce qu'**
on utilise en tant qu'agent en couleurs une couleur de dispersion de la laque ou du PVC liquide.

3. Procédé conforme à la revendication 1 ou 2,
**caractérisé en ce qu'**
on applique et dégaze successivement sur la surface de l'outil plusieurs agents en couleurs différents ou ayant une couleur différente pour pouvoir ensuite les transférer sur la peau de cuisson en matériau synthétique de façon à former une image complexe ou en plusieurs couleurs.

4. Utilisation de peaux de cuisson en matériau synthétique obtenues par la mise en oeuvre du procédé conforme à l'une des revendications 1 à 3, pour l'obtention de pièces moulées destinées à des tableaux de bord, des composants de portes, des consoles centrales ou autres pièces moulées en matériau synthétique de véhicules automobiles.
